# EUROPÄISCHE PATENTSCHRIFT

(11) **EP 3 960 372 B1**
(45) Veröffentlichungstag und Bekanntmachung des Hinweises auf die Patenterteilung: **10.12.2025**
(21) Anmeldenummer: 21189780.6
(22) Anmeldetag: 05.08.2021
(51) Int. Cl.: B25B 21/00, B25F 5/00, B25D 16/00, B23B 45/00, B25B 21/02

(54) **HANDWERKZEUGMASCHINE MIT EINEM SCHALTBAREN GETRIEBE**
HAND-HELD MACHINE TOOL COMPRISING A SHIFTABLE GEARBOX
MACHINE-OUTIL PORTATIVE DOTÉE D'UNE TRANSMISSION COMMUTABLE

(30) Priorität: 27.08.2020 DE 102020210824
(43) Veröffentlichungstag der Anmeldung: 02.03.2022
(73) Patentinhaber: Robert Bosch GmbH, 70442 Stuttgart (DE)
(72) Erfinder: Subramaniam, Suresh, 70499 Stuttgart-Weilimdorf (DE); Windsheimer, Ralf, 70176 Stuttgart (DE); Hampel, Thomas, 71106 Magstadt (DE)

(56) Entgegenhaltungen:
- DE-A1- 102015 226 089
- DE-A1- 102017 222 006

## Beschreibung

### Stand der Technik

Die vorliegende Erfindung betrifft eine Handwerkzeugmaschine mit einer Antriebs-einheit zum drehenden Antrieb einer Werkzeugaufnahme um eine zugeordnete Drehachse, wobei die Antriebseinheit zumindest einen Antriebsmotor sowie ein schaltbares Getriebe aufweist, wobei das schaltbare Getriebe in einem Getriebegehäuse mit einem zumindest abschnittsweise hülsenförmigen Kupplungsgehäuse und einem daran befestigten Getriebedeckel angeordnet ist, wobei ein Schaltelement zum Umschalten des schaltbaren Getriebes zwischen mindestens zwei unterschiedlichen Gangstufen vorgesehen ist, und wobei eine Arretierhülse zur Arretierung des Schaltelements in mindestens einer ersten und einer zweiten Schaltposition im Kupplungsgehäuse angeordnet ist.

Aus dem Stand der Technik ist eine derartige Handwerkzeugmaschine mit einer Antriebseinheit bekannt. Die Antriebseinheit weist einen Antriebsmotor und ein schaltbares Getriebe auf. Das schaltbare Getriebe ist in einem Getriebegehäuse angeordnet, und über ein Schaltelement ist ein zugeordnetes Schalthohlrad zur Gangumschaltung beaufschlagbar. Dabei ist das Schaltelement am Außenumfang des Getriebegehäuses angeordnet.

Die DE 10 2017 222006 A1 offenbart eine Handwerkzeugmaschine mit einem Gehäuse, in dem ein Antriebsmotor und ein von dem Antriebsmotor antreibbares Getriebe zum Antrieb einer Abtriebswelle angeordnet sind.

In der DE 10 2015 226089 A1 wird eine Handwerkzeugmaschine mit einem schaltbaren Getriebe beschrieben, dem eine Gangumschalteeinheit zum Umschalten zwischen mindestens zwei unterschiedlichen Gangstufen zugeordnet ist.

### Offenbarung der Erfindung

Die Erfindung betrifft eine Handwerkzeugmaschine mit einer Antriebseinheit zum drehenden Antrieb einer Werkzeugaufnahme um eine zugeordnete Drehachse, wobei die Antriebseinheit zumindest einen Antriebsmotor sowie ein schaltbares Getriebe aufweist, wobei das schaltbare Getriebe in einem Getriebegehäuse mit einem zumindest abschnittsweise hülsenförmigen Kupplungsgehäuse und einem
daran befestigten Getriebedeckel angeordnet ist, wobei ein Schaltelement zum Umschalten des schaltbaren Getriebes zwischen mindestens zwei unterschiedlichen Gangstufen vorgesehen ist, und wobei eine Arretierhülse zur Arretierung des Schaltelements in mindestens einer ersten und einer zweiten Schaltposition im Kupplungsgehäuse angeordnet ist. Das schaltbare Getriebe bildet zumindest in der ersten Schaltposition des Schaltelements senkrecht zur Drehachse eine Querschnittsebene aus, in der zumindest bereichsweise die Arretierhülse zwischen dem Getriebedeckel und dem Schaltelement angeordnet ist und das Schaltelement zumindest bereichsweise zwischen der Arretierhülse und dem Kupplungsgehäuse angeordnet ist.

Die Erfindung ermöglicht somit die Bereitstellung einer Handwerkzeugmaschine, die durch die vorgegebene Anordnung in der Querschnittsebene mit einem kompakten Getriebe ausgestattet werden kann.

Bevorzugt weist das schaltbare Getriebe ein von dem Schaltelement axial verschiebbares Schalthohlrad auf, das in einer von der Arretierhülse ausgebildeten Innenaufnahme angeordnet ist, wobei das Schalthohlrad an seinem Außenumfang eine Aufnahmenut zur zumindest abschnittsweisen Aufnahme des Schaltelements aufweist.

Somit kann sicher und unkompliziert eine zumindest abschnittsweise Anordnung des Schaltelements am Schalthohlrad zur Gangumschaltung ermöglicht werden.

Vorzugsweise weist der Getriebedeckel einen in der Innenaufnahme der Arretierhülse angeordneten, ringförmigen Zentrierungskragen zur Zentrierung der Arretierhülse in radialer Richtung auf.

Somit kann auf einfache Art und Weise eine Zentrierung der Arretierhülse ermöglicht werden.

Der Getriebedeckel greift bevorzugt formschlüssig in die Arretierhülse ein.

Somit kann eine sichere und zuverlässige Anordnung des Getriebedeckels an der Arretierhülse ermöglicht werden.

Gemäß einer Ausführungsform weist die Arretierhülse an ihrem dem Getriebedeckel zugewandten axialen Ende zumindest einen axial ausgerichteten Positioniersteg auf, wobei der Getriebedeckel eine Aufnahme zur Aufnahme des zumindest einen axial ausgerichteten Positionierstegs aufweist.

Somit kann eine sichere und zuverlässige Positionierhilfe bereitgestellt werden und eine Vorpositionierung des Getriebedeckels während der Montage des schaltbaren Getriebes ermöglicht werden.

Vorzugsweise weist die Arretierhülse an ihrem dem Getriebedeckel zugewandten axialen Ende zumindest einen Abstützsteg auf, der sich an einem Schraubdom des Getriebedeckels abstützt.

Somit kann eine stabile und robuste Abstützung des Getriebedeckels ermöglicht werden. Des Weiteren kann der zumindest eine Abstützsteg eine Positionierhilfe sowie eine Vorpositionierung des Getriebedeckels während der Montage des schaltbaren Getriebes ermöglichen.

Bevorzugt sind an dem dem Getriebedeckel zugewandten axialen Ende der Arretierhülse mindestens zwei Abstützstege angeordnet, wobei der Positioniersteg und die Abstützstege bevorzugt eine dreieckige Anordnung ausbilden.

Somit kann eine kompakte und zuverlässige Anordnung des Getriebedeckels an der Arretierhülse ermöglicht werden.

Vorzugsweise ist der Getriebedeckel mit mindestens einem Schraubelement am Kupplungsgehäuse befestigt, wobei das mindestens eine Schraubelement den Getriebedeckel in Richtung der Werkzeugaufnahme beaufschlagt. Des Weiteren ist der Getriebedeckel bevorzugt an einer dem Antriebsmotor zugewandten Seite des Kupplungsgehäuses befestigt.

Gemäß einer Ausführungsform bildet der Getriebedeckel an seiner der Werkzeugaufnahme zugewandten Seite ein Hohlrad des schaltbaren Getriebes aus.

Somit kann ein kompaktes schaltbares Getriebe mit einer reduzierten Baulänge bereitgestellt werden.

Bevorzugt weist die Arretierhülse an ihrem Außenumfang diametral gegenüberliegend ausgebildete Umlenkstege zum Umlenken des Schaltelements bei einem Umschalten von einer ersten in eine zweite Gangstufe auf. Des Weiteren weist die Arretierhülse vorzugsweise zugeordnete Ausnehmungen zum Durchführen des Schaltelements auf. Darüber hinaus sind das Kupplungsgehäuse und die Arretierhülse bevorzugt über eine formschlüssige Verbindung miteinander verbunden.

Gemäß einer Ausführungsform weist das Kupplungsgehäuse an seinem Innenumfang zumindest einen einwärts gerichteten Vorsprung auf und die Arretierhülse weist an ihrem Außenumfang zumindest eine Aufnahme auf, wobei der zumindest eine Vorsprung in der zumindest einen Aufnahme angeordnet ist.

Somit kann auf einfache Art und Weise eine Verdrehsicherung und/oder eine Momentenabstützung zwischen dem Kupplungsgehäuse und der Arretierhülse ausgebildet werden.

Vorzugsweise ist der zumindest eine Vorsprung parallel zur Drehachse angeordnet.

Somit kann eine einfache und unkomplizierte Anordnung des Vorsprungs ermöglicht werden.

Gemäß einer Ausführungsform sind mehrere Vorsprünge als einstufige Vorsprünge mit einer einzelnen Stufe und/oder als zweistufige Vorsprünge mit einer ersten Stufe und einer zweiten Stufe ausgebildet, wobei die zweite Stufe in radialer Richtung eine größere Höhe aufweist als die erste Stufe.

Somit können auf einfache Art und Weise geeignete Vorsprünge bereitgestellt werden.

Bevorzugt weist die Arretierhülse den Vorsprüngen zugeordnete Aufnahmen zur Verdrehsicherung und Zentrierung der Arretierhülse am Kupplungsgehäuse auf.

Somit kann eine sichere und zuverlässige Verbindung zwischen der Arretierhülse und dem Kupplungsgehäuse bereitgestellt werden.

Gemäß einer Ausführungsform ist ein Fixierring an dem der Werkzeugaufnahme zugewandten axialen Ende der Arretierhülse angeordnet, wobei der Fixierring bei einer Anordnung des Schaltelements in der ersten Schaltposition ein Verdrehen des Schalthohlrads verhindert.

Somit kann ein sicherer und zuverlässiger Betrieb des schaltbaren Getriebes ermöglicht werden, bei dem ein Verdrehen des Schalthohlrads in der ersten Schaltposition verhindert wird.

Bevorzugt weist der Fixierring Metall auf. Vorzugsweise weist das Schalthohlrad an seinem Außenumfang eine Außenverzahnung auf und der Fixierring weist an seinem Innenumfang eine Innenverzahnung auf, wobei die Außenverzahnung des Schalthohlrads mit der Innenverzahnung des Fixierrings einen Formschluss ausbildet.

Gemäß einer Ausführungsform weist die Arretierhülse ringförmige Erweiterungen auf und der Fixierring ist derart an der Arretierhülse angeordnet, dass die ringförmigen Erweiterungen den Fixierring umfangsseitig aufnehmen.

Somit kann eine sichere und zuverlässige Anordnung des Fixierrings ermöglicht werden, wobei eine Verdrehsicherung und/oder Momentenabstützung des Fixierrings ausgebildet werden kann.

Bevorzugt sind die ringförmigen Erweiterungen an einem der Werkzeugaufnahme zugewandten axialen Ende der Arretierhülse angeordnet. Hierbei ist vorzugsweise zwischen zwei benachbarten ringförmigen Erweiterungen jeweils eine Aufnahme ausgebildet.

Vorzugsweise ist das schaltbare Getriebe ein Planetengetriebe mit mindestens einem Hohlrad, mindestens einem Planetenträger und zumindest einem Planetenrad, wobei zwischen dem mindestens einen Planetenträger und dem zumindest einen Planetenrad eine scheibenförmige Platte angeordnet ist, die in der ersten Schaltposition des Schaltelements eine Bewegung des Planetenträgers in das Hohlrad verhindert. Bevorzugt ist die scheibenförmige Platte axial am Kupplungsgehäuse abgestützt. Hierbei ist die scheibenförmige Platte bevorzugt an einem der Werkzeugaufnahme zugewandten axialen Ende des Fixierrings angeordnet. Dabei weisen die scheibenförmige Platte und der Fixierring vorzugsweise jeweils an ihrem Außenumfang Ausnehmungen auf, wobei die Ausnehmungen zur Aufnahme von Vorsprüngen des Kupplungsgehäuses ausgebildet sind. Darüber hinaus weist der Fixierring bevorzugt an seinem Außenumfang Stege auf, wobei zwischen zwei benachbarten Stegen eine erste oder eine zweite Aufnahme ausgebildet ist, und wobei die erste Aufnahme zur Aufnahme der Vorsprünge ausgebildet ist und die zweite Aufnahme zur Aufnahme der ringförmigen Erweiterungen der Arretierhülse ausgebildet ist. Vorzugsweise weist das Kupplungsgehäuse an seinem Innenumfang zumindest abschnittsweise in Umfangsrichtung eine Anstehkante zur Abstützung der scheibenförmigen Platte auf.

Gemäß einer Ausführungsform weist das Kupplungsgehäuse eine entlang der Drehachse der Werkzeugaufnahme ausgebildete Ausnehmung auf, durch die das Schaltelement mit einem Bedienelement zum Betätigen des Schaltelements verbunden ist.

Somit kann eine sichere und zuverlässige Bedienung des schaltbaren Getriebes ermöglicht werden.

Bevorzugt weist das Schaltelement einen bogenförmigen, vorzugsweise zumindest annähernd U-förmigen, Grundkörper auf. Darüber hinaus weist die Arretierhülse vorzugsweise Kunststoff auf.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer Handwerkzeugmaschine mit einem in einem Getriebegehäuse angeordneten, schaltbaren Getriebe,
- Fig. 2: eine perspektivische Ansicht des im Getriebegehäuse von Fig. 1 angeordneten schaltbaren Getriebes von Fig. 1,
- Fig. 3: eine Schnittansicht des schaltbaren Getriebes von Fig. 1 und Fig. 2,
- Fig. 4: eine Schnittansicht des schaltbaren Getriebes von Fig. 1 und Fig. 2, im Bereich eines dem Getriebe zugeordneten Getriebedeckels,
- Fig. 5: eine Seitenansicht des schaltbaren Getriebes von Fig. 1 bis Fig. 3,
- Fig. 6: eine Seitenansicht des schaltbaren Getriebes von Fig. 4, ohne eine dem Getriebegehäuse zugeordnete Arretierhülse,
- Fig. 7: eine perspektivische Ansicht eines dem schaltbaren Getriebe von Fig. 1 bis Fig. 6 zugeordneten Getriebedeckels,
- Fig. 8: eine perspektivische Ansicht eines dem schaltbaren Getriebe von Fig. 1 bis Fig. 6 zugeordneten Kupplungsgehäuses,
- Fig. 9: eine perspektivische Ansicht einer dem schaltbaren Getriebe von Fig. 1 bis Fig. 6 zugeordneten Arretierhülse,
- Fig. 10: eine perspektivische Ansicht eines dem schaltbaren Getriebe von Fig. 1 bis Fig. 6 zugeordneten Schalthohlrads,
- Fig. 11: eine perspektivische Ansicht eines dem schaltbaren Getriebe von Fig. 1 bis Fig. 6 zugeordneten Schaltelements,
- Fig. 12: eine perspektivische Seitenansicht der Arretierhülse von Fig. 9,
- Fig. 13: eine perspektivische Ansicht der Arretierhülse von Fig. 12, mit einem zugeordneten Fixierring,
- Fig. 14: eine Schnittansicht des schaltbaren Getriebes von Fig. 1 bis Fig. 6, zur Verdeutlichung der Anordnung des Fixierrings von Fig. 13,
- Fig. 15: eine Schnittansicht des schaltbaren Getriebes von Fig. 1 bis Fig. 6, zur Verdeutlichung der Anordnung einer der Arretierhülse zugeordneten Platte, und
- Fig. 16: einen Längsschnitt durch das schaltbare Getriebe von Fig. 1 bis Fig. 6.

### Beschreibung der Ausführungsbeispiele

In den Figuren werden Elemente mit gleicher oder vergleichbarer Funktion mit identischen Bezugszeichen versehen und nur einmal genauer beschrieben.

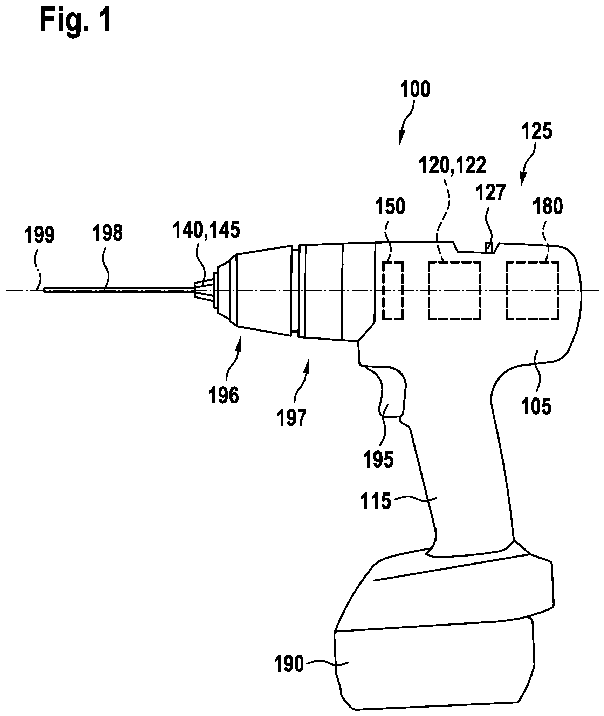

Fig. 1 zeigt eine beispielhafte Handwerkzeugmaschine 100 mit einem Gehäuse 105, in dem vorzugsweise eine Antriebseinheit 125 zum drehenden Antrieb einer Werkzeugaufnahme 140 angeordnet ist. Die Werkzeugaufnahme 140 ist illustrativ zur Aufnahme eines Einsatzwerkzeugs 198 ausgebildet und rotiert im Betrieb um eine Drehachse 199.

Illustrativ ist die Handwerkzeugmaschine 100 zur netzunabhängigen Stromversorgung mechanisch und elektrisch mit einem Akkupack 190 verbindbar, kann alternativ hierzu z.B. aber auch netzabhängig betreibbar sein. Beispielhaft ist die Handwerkzeugmaschine 100 als Bohrschrauber ausgebildet. Dementsprechend ist die Werkzeugaufnahme 140 illustrativ nach Art eines Bohrfutters 145 ausgebildet, das beispielhaft mit einer Schutzhülse 196 versehen ist. Alternativ hierzu kann die Werkzeugaufnahme 140 jedoch auch nach Art eines Werkzeugvorsatzes bereitgestellt werden, der lösbar an der Handwerkzeugmaschine 100 angeordnet ist.

Jedoch kann die Handwerkzeugmaschine 100 z.B. auch als Bohrhammer oder Bohrschlagschrauber ausgebildet sein. In diesem Fall weist die Handwerkzeugmaschine 100 ein zugeordnetes Schlagwerk 150 auf, das bei der Ausbildung als Bohrschrauber nicht erforderlich ist. Es wird jedoch darauf hingewiesen, dass die vorliegende Erfindung nicht auf Bohrschrauber, Bohrhämmer oder Bohrschlagschrauber beschränkt ist, sondern generell bei Handwerkzeugmaschinen Anwendung finden kann, deren Antriebseinheit ein schaltbares Getriebe, insbesondere ein Planetengetriebe, aufweist.

Im dargestellten Ausführungsbeispiel weist die Antriebseinheit 125 illustrativ zumindest einen Antriebsmotor 180 und ein schaltbares Getriebe 120 auf. Bevorzugt ist der Antriebsmotor 180 als elektronisch kommutierter Motor ausgebildet. Vorzugsweise ist der Antriebsmotor 180 über einen Handschalter 195 ein- und ausschaltbar, wobei der Handschalter 195 illustrativ an einem Handgriff 115 des Gehäuses 105 angeordnet ist.

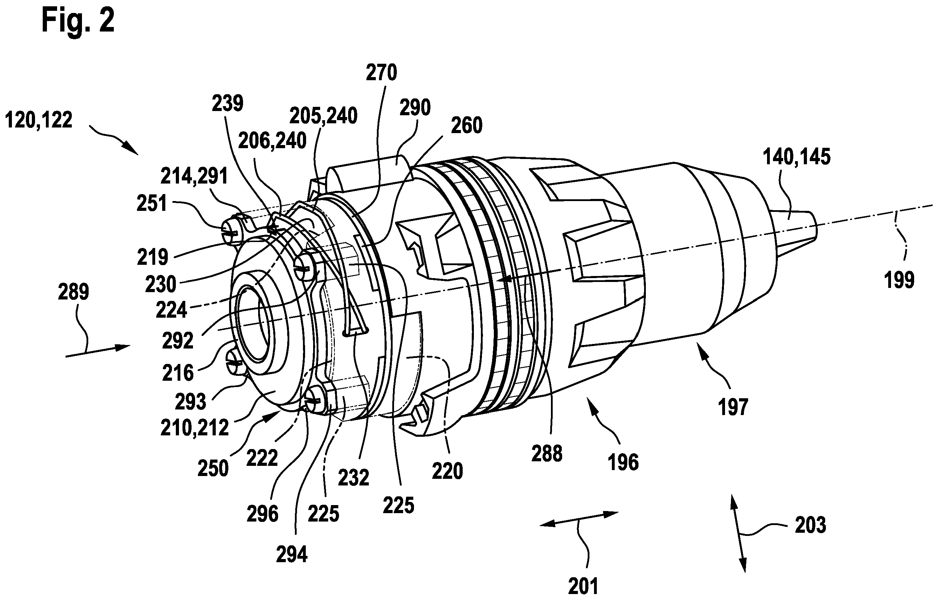

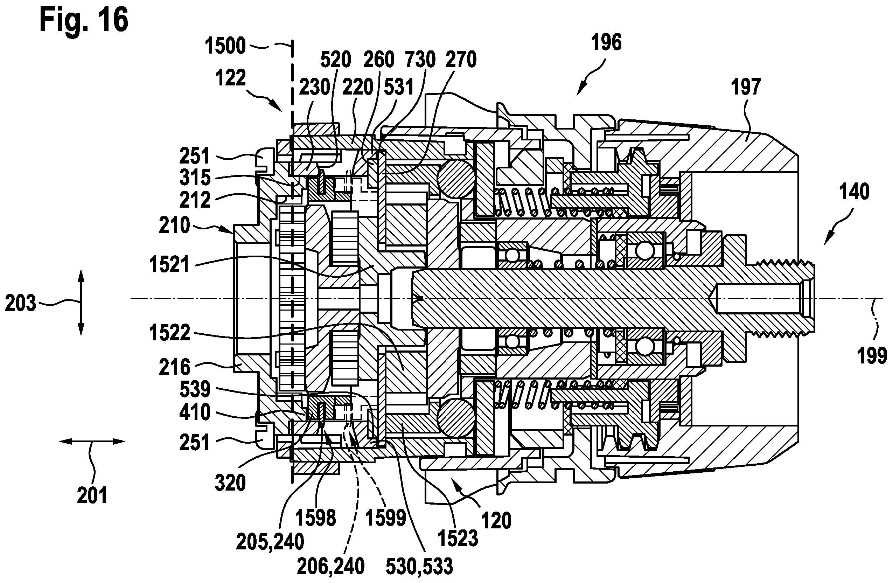

Das schaltbare Getriebe 120 ist vorzugsweise als Planetengetriebe ausgebildet. Bevorzugt ist das schaltbare Getriebe 120 in einem Getriebegehäuse 122 angeordnet. Vorzugsweise ist dem schaltbaren Getriebe 120 ein Schaltelement (240 in Fig. 2) zum Umschalten zwischen mindestens zwei unterschiedlichen Gangstufen (1598, 1599 in Fig. 16) zugeordnet, in denen das Schaltelement (240 in Fig. 2) in entsprechenden, den Gangstufen (1598, 1599 in Fig. 16) zugeordneten Schaltpositionen (205, 206 in Fig. 2) angeordnet ist. Bevorzugt weist das schaltbare Getriebe 120 ein Bedienelement 127 zum Betätigen des Schaltelements (240 in Fig. 2) bzw. zur manuellen Gangumschaltung durch einen Benutzer auf.

Das schaltbare Getriebe 120 wird nachfolgend der Einfachheit halber lediglich als das "Getriebe 120" bezeichnet.

Darüber hinaus weist die Handwerkzeugmaschine 100 optional eine Drehmomenteinstellvorrichtung mit einer Drehmomenteinstellhülse 197 auf. Eine derartige Drehmomenteinstellvorrichtung ist hinreichend aus dem Stand der Technik bekannt, sodass hier zwecks Knappheit der Beschreibung auf eine eingehende Beschreibung der Drehmomenteinstellvorrichtung verzichtet wird.

Fig. 2 zeigt das in dem Getriebegehäuse 122 angeordnete Getriebe 120 mit dem Bohrfutter 145 von Fig. 1. Darüber hinaus verdeutlicht Fig. 2 ein Betriebsmodus-Einstellelement 290. Illustrativ ist das Betriebsmodus-Einstellelement 290 als Hülse ausgebildet.

Das Getriebegehäuse 122 weist vorzugsweise ein zumindest abschnittsweise hülsenförmiges Kupplungsgehäuse 220 und einen daran befestigten Getriebedeckel 210 auf. Des Weiteren ist vorzugsweise eine Arretierhülse 230 zur Arretierung eines Schaltelements 240 im Kupplungsgehäuse 220 angeordnet.

Illustrativ ist das Kupplungsgehäuse 220 zur Verdeutlichung der Darstellung transparent abgebildet. Dabei ist vorzugsweise die Arretierhülse 230 an einem Innenumfang 222 des Kupplungsgehäuses 220 angeordnet. Bevorzugt ist die Arretierhülse 230 am Kupplungsgehäuse 220 fixiert. Vorzugsweise sind das Kupplungsgehäuse 220 und die Arretierhülse 230 über eine formschlüssige Verbindung miteinander verbunden. Des Weiteren greift der Getriebedeckel 210 vorzugsweise formschlüssig in die Arretierhülse 230 ein.

Bevorzugt ist der Getriebedeckel 210 an einem von der Werkzeugaufnahme 140 abgewandten Ende des Getriebegehäuses 122 angeordnet. Illustrativ weist der Getriebedeckel 210 einen scheibenförmigen Grundkörper mit einem zentralen Lagerflansch 216, sowie eine dem Antriebsmotor 180 zugewandte Seite 289 und eine der Werkzeugaufnahme 140 zugewandte Seite 288 auf. An seinem Außenumfang weist der Getriebedeckel 210 bevorzugt zumindest zwei, illustrativ vier Verbindungsabschnitte 214 auf. Hierbei bilden die vier Verbindungabschnitte 214 zumindest annähernd ein Rechteck aus. Bevorzugt sind den Verbindungsabschnitten 214 Schraubdome 291, 292, 293, 294 zugeordnet.

Gemäß einer Ausführungsform ist der Getriebedeckel 210 an einer dem Antriebsmotor 180 zugewandten Seite des Kupplungsgehäuses 220 befestigt. Bevorzugt ist der Getriebedeckel 210 über eine Schraubverbindung 250 mit mindestens einem Schraubelement 251 am Kupplungsgehäuses 220 befestigt. Der Getriebedeckel 210 ist illustrativ über vier Schraubdome 291, 292, 293 294 mittels vier zugeordneten Schraubelementen 251 am Kupplungsgehäuse 220 befestigt. Hierbei beaufschlagen die Schraubelemente 251 den Getriebedeckel 210 in Richtung der Werkzeugaufnahme 140, bevorzugt in axialer Richtung 201 zur Werkzeugaufnahme 140.

Vorzugsweise weist das Kupplungsgehäuse 220 den Verbindungsabschnitten 214 zugeordnete Verbindungsbereiche 225 auf. Bevorzugt weisen die Verbindungsbereiche 225 jeweils einen Gewindebereich zur Anordnung der Schraubelemente 251 auf. Vorzugsweise ist jedem Verbindungsabschnitt 214 bzw. Verbindungsbereich 225 jeweils ein Schraubelement 251 zur Ausbildung der entsprechenden Schraubverbindung 250 zugeordnet.

Des Weiteren bildet der Getriebedeckel 210 vorzugsweise an seiner der Werkzeugaufnahme 140 zugewandten Seite 288 ein Hohlrad 212 des Getriebes 120 aus. Bevorzugt ist das Hohlrad 212 einstückig mit dem Getriebedeckel 210 ausgebildet. Jedoch kann das Hohlrad 212 auch durch eine beliebige Verbindung fest oder lösbar am Getriebedeckel 210 fixiert sein.

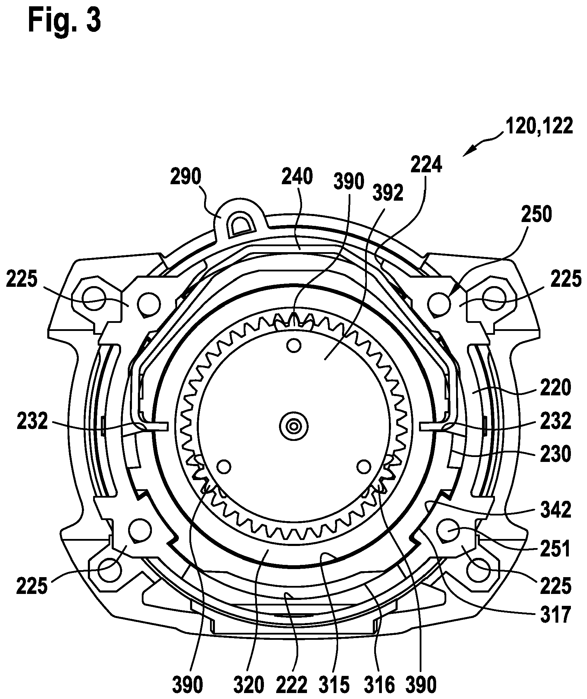

Bevorzugt ist dem Getriebe 120 ein Schaltelement 240 zum Umschalten zwischen mindestens zwei unterschiedlichen Gangstufen (1598, 1599 in Fig. 16) zugeordnet. Das Schaltelement 240 ist dabei in den Gangstufen (1598, 1599 in Fig. 16) zugeordneten Schaltpositionen 205, 206 anordenbar. Vorzugsweise ist dabei das Schaltelement 240 in einer illustrativ rechten Schaltposition 205 und einer illustrativ linken Schaltposition 206 anordenbar. In der rechten Schaltposition 205 ist ein dem Schaltelement 240 zugeordnetes Schalthohlrad (320 in Fig. 3) in einer illustrativ linken Position bzw. in einer ersten Gangstufe (1598 in Fig. 16) angeordnet und in der linken Schaltposition 206 ist das Schalthohlrad (320 in Fig. 3) in einer illustrativ rechten Position bzw. in einer weiteren Gangstufe (1599 in Fig. 16) angeordnet. Vorzugsweise bildet das Getriebe 120 zumindest in der rechten Schaltposition 205 des Schaltelements 240 senkrecht zur Drehachse 199 eine Querschnittsebene (1500 in Fig. 16) aus, in der zumindest bereichsweise die Arretierhülse 230 zwischen dem Getriebedeckel 210 und dem Schaltelement 240 angeordnet ist und das Schaltelement 240 zumindest bereichsweise zwischen der Arretierhülse 230 und dem Kupplungsgehäuse 220 angeordnet ist.

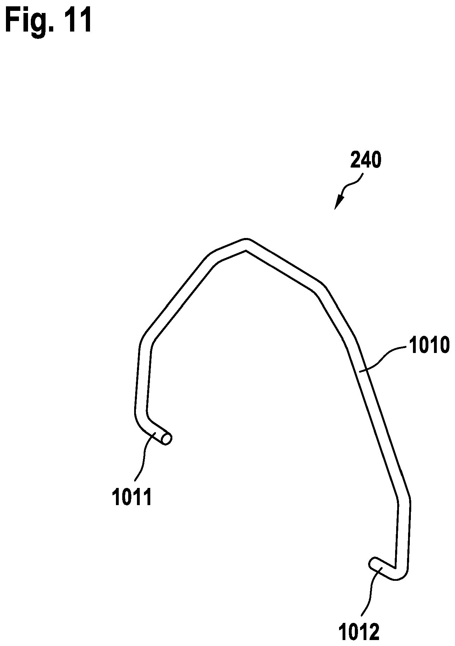

Gemäß einer Ausführungsform weist das Schaltelement 240 einen bogenförmigen, bevorzugt zumindest annähernd U-förmigen Grundkörper (1010 in Fig. 11) auf. Das Schaltelement 240 ist vorzugsweise zumindest abschnittsweise zwischen dem Kupplungsgehäuse 220 und der Arretierhülse 230 angeordnet. Dabei ist das Schaltelement 240 bevorzugt dazu ausgebildet, zum Umschalten des Getriebes 120 das Schalthohlrad (320 in Fig. 3) entlang der Drehachse 199 der Werkzeugaufnahme 140 zur Gangumschaltung zu beaufschlagen.

Bevorzugt weist die Arretierhülse 230 zugeordnete Ausnehmungen 232 zum Durchführen des Schaltelements 240 auf. Vorzugsweise weist das Kupplungsgehäuse 220 eine entlang der Drehachse 199 der Werkzeugaufnahme 140 ausgebildete Ausnehmung 224 auf, durch die das Schaltelement 240 mit dem Bedienelement 127 von Fig. 1 zum Betätigen des Schaltelements 240 verbindbar ist.

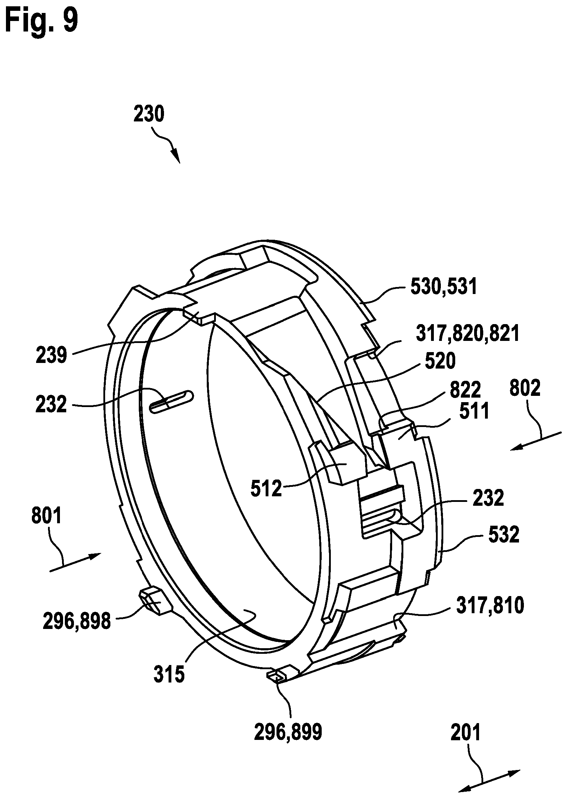

Gemäß einer Ausführungsform weist die Arretierhülse 230 an ihrem dem Getriebedeckel 210 zugewandten axialen Ende (801 in Fig. 9) zumindest einen axial ausgerichteten Positioniersteg 239 auf, wobei der Getriebedeckel 210 eine Aufnahme 219 zur Aufnahme des zumindest einen axial ausgerichteten Positionierstegs 239 aufweist. Unter dem Begriff "axial ausgerichtet" wird im Kontext der vorliegenden Erfindung eine Ausrichtung in axialer Richtung 201 bzw. entlang der Drehachse 199 verstanden.

Darüber hinaus weist die Arretierhülse 230 bevorzugt an ihrem dem Getriebedeckel 210 zugewandten axialen Ende (801 in Fig. 9) zumindest einen Abstützsteg 296 auf, der sich an einem Schraubdom 293, 294 des Getriebedeckels 210 abstützt. Vorzugsweise sind an dem dem Getriebedeckel 210 zugewandten axialen Ende (801 in Fig. 9) der Arretierhülse 230 mindestens zwei Abstützstege 296 angeordnet, wobei der Positioniersteg 239 und die Abstützstege 296 bevorzugt eine dreieckige Anordnung ausbilden. Es wird jedoch darauf hingewiesen, dass die Anordnung auch eine beliebig andere Form aufweisen kann, z.B. rechteckig.

Des Weiteren ist ein Fixierring 260 an dem der Werkzeugaufnahme 140 zugewandten axialen Ende (802 in Fig. 9) der Arretierhülse 230 angeordnet. Bevorzugt liegt der Fixierring 260 in axialer Richtung 201 an der Arretierhülse 230 an. Der Fixierring 260 verhindert bevorzugt bei einer Anordnung des Schaltelements 240 in der rechten Schaltposition 205 ein Verdrehen des Schalthohlrads (320 in Fig. 3), wobei eine Fixierung bzw. Blockierung des Schalthohlrads (320 in Fig. 3) ausgebildet wird.

Darüber hinaus ist dem Getriebe 120 vorzugsweise eine scheibenförmige Platte 270 zugeordnet, die in der illustrativ rechten Schaltposition 205 des Schaltelements 240 eine Bewegung eines dem Getriebe 120 zugeordneten Planetenträgers (1521 in Fig. 16) in ein weiteres Hohlrad (1523 in Fig. 16) verhindert. Hierbei ist die scheibenförmige Platte 270 bevorzugt axial, bzw. in axialer Richtung 203, d.h. entlang der Drehachse 199, am Kupplungsgehäuse 220 abgestützt. Des Weiteren ist die scheibenförmige Platte 270 an einem der Werkzeugaufnahme 140 zugewandten axialen Ende des Fixierrings 260 angeordnet. Es wird darauf hingewiesen, dass die scheibenförmige Platte 270 nachfolgend der Einfachheit halber lediglich als "Platte 270" bezeichnet wird.

Bevorzugt weist die Arretierhülse 230 ein erstes Material auf und der Fixierring 260 weist ein zweites Material auf, das sich vom ersten Material unterscheidet. Vorzugsweise ist das erste Material Kunststoff und das zweite Material Metall. Durch die Ausgestaltung des Fixierrings 260 mit Metall kann ein Verschleiß bei Schaltvorgängen mit dem Schalthohlrad (320 in Fig. 3) verringert werden.

Es wird darauf hingewiesen, dass in der vorliegenden Beschreibung unter dem Begriff "axial" eine Anordnung bzw. Ausrichtung in axialer Richtung 201, d.h. entlang der Drehachse 199, zu verstehen ist. Ebenfalls ist in der vorliegenden Beschreibung unter dem Begriff "radial" eine Anordnung bzw. Ausrichtung in radialer Richtung 203, d.h. senkrecht zur Drehachse 199, zu verstehen.

Fig. 3 zeigt das Getriebegehäuse 122 mit dem Kupplungsgehäuse 220 und der Arretierhülse 230 von Fig. 2. Wie oben beschrieben, ist die Arretierhülse 230 am Innenumfang 222 des Kupplungsgehäuses 220 angeordnet und vorzugsweise daran fixiert.

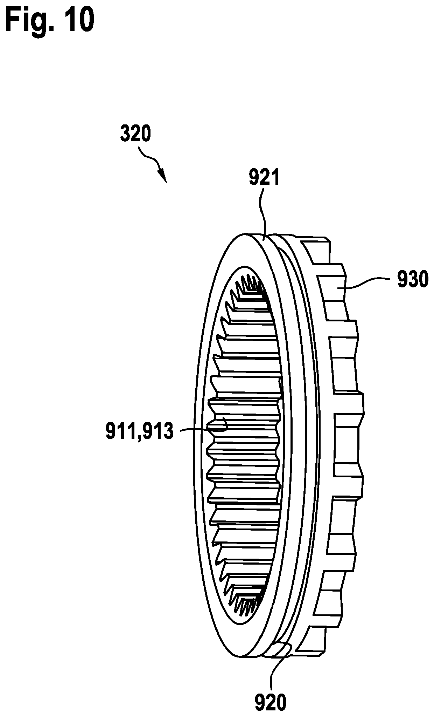

Bevorzugt weist das Getriebe 120 ein von dem Schaltelement 240 axial verschiebbares Schalthohlrad 320 auf. Das Schalthohlrad 320 ist in einer von der Arretierhülse 230 ausgebildeten Innenaufnahme 315 angeordnet, wobei das Schalthohlrad 320 an seinem Außenumfang (921 in Fig. 10) vorzugsweise eine Aufnahmenut (920 in Fig. 10) zur zumindest abschnittsweisen Aufnahme des Schaltelements 240 aufweist. Des Weiteren verdeutlicht Fig. 3 einen dem Schalthohlrad 320 zugeordneten Planetenträger 392, dem illustrativ drei Planeten 390 zugeordnet sind.

Bevorzugt weist das Kupplungsgehäuse 220 an seinem Innenumfang 222 zumindest einen, illustrativ vier einwärts gerichtete, insbesondere radial einwärts gerichtete, Vorsprünge 342 auf. Im Kontext der vorliegenden Erfindung ist unter dem Begriff "einwärts gerichtet" eine Ausrichtung in radialer Richtung 203 von Fig. 2 nach innen, bzw. zur Drehachse 199 hin, zu verstehen. Bevorzugt sind die Vorsprünge 342 in ihrer Längserstreckung zumindest annähernd parallel zur Drehachse 199 von Fig. 1 und Fig. 2 angeordnet.

Analog dazu weist die Arretierhülse 230 an ihrem Außenumfang 316 zumindest eine, illustrativ vier Aufnahmen 317 auf. Vorzugsweise sind die Vorsprünge 342 in den zugeordneten Aufnahmen 317 zur Ausbildung einer Verdrehsicherung angeordnet. Dabei wird die Arretierhülse 230 an ihrem Außenumfang, bzw. über die Aufnahmen 317, durch das Kupplungsgehäuse 220 über die Vorsprünge 342 zentriert. Gemäß einer Ausführungsform sind die Vorsprünge 342 im Verbindungsbereich 225 des Kupplungsgehäuses 220 zugeordnet, bevorzugt einstückig mit dem Verbindungsbereich 225 ausgebildet.

Des Weiteren verdeutlicht Fig. 3 die der Arretierhülse 230 zugeordneten Ausnehmungen 232 zum Durchführen des Schaltelements 240. Illustrativ weist die Arretierhülse 230 zwei diametral gegenüberliegende Ausnehmungen 232 zur Durchführung je eines Endes (1011, 1012 in Fig. 11) des Schaltelements 240 auf. Dabei ist ein Ende des Schaltelements 240 vorzugsweise in einer Aufnahme, insbesondere der Aufnahmenut (920 in Fig. 10) des Schalthohlrads 320, angeordnet.

Darüber hinaus verdeutlicht Fig. 3 die am Kupplungsgehäuse 220 ausgebildete Ausnehmung 224. Illustrativ ragt das Schaltelement 240 an einem oberen Bereich des Kupplungsgehäuses 220 durch die Ausnehmung 224. Bevorzugt ist das Kupplungsgehäuse 220 mit der Ausnehmung 224 derart ausgebildet, dass das Schaltelement 240 zumindest teilweise, bevorzugt komplett, innerhalb des Getriebegehäuses 122, insbesondere im Kupplungsgehäuse 220, angeordnet ist. D.h. dass das Schaltelement 240 das Kupplungsgehäuse 220 bevorzugt in radialer Richtung des Getriebegehäuses 122 nicht überragt. Gemäß einer Ausführungsform ist das Schaltelement 240 zumindest teilweise, bevorzugt komplett, unterhalb der Schraubverbindung 250 von Fig. 2 angeordnet, bzw. in einer gleichen Ebene angeordnet.

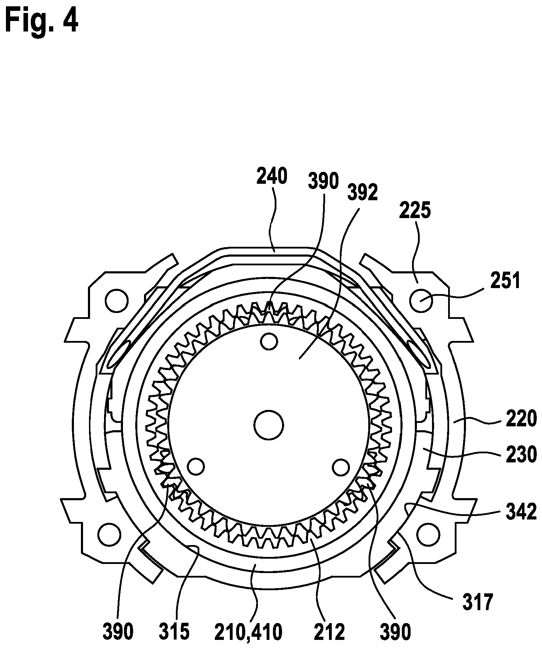

Fig. 4 zeigt das Kupplungsgehäuse 220 und die Arretierhülse 230 von Fig. 3, sowie den Getriebedeckel 210 von Fig. 2. Dabei verdeutlicht Fig. 4 einen in der Innenaufnahme 315 der Arretierhülse 230 angeordneten Zentrierungskragen 410 des Getriebedeckels 210. Der Zentrierungskragen 410 ist vorzugsweise ringförmig ausgebildet, kann jedoch auch lediglich in Umfangsrichtung des Getriebedeckels 210 abschnittsweise ausgebildet sein, z.B. als Ringsegment. Der Zentrierungskragen 410 ist zur Zentrierung der Arretierhülse 230 bevorzugt in radialer Richtung 203 von Fig. 2 ausgebildet.

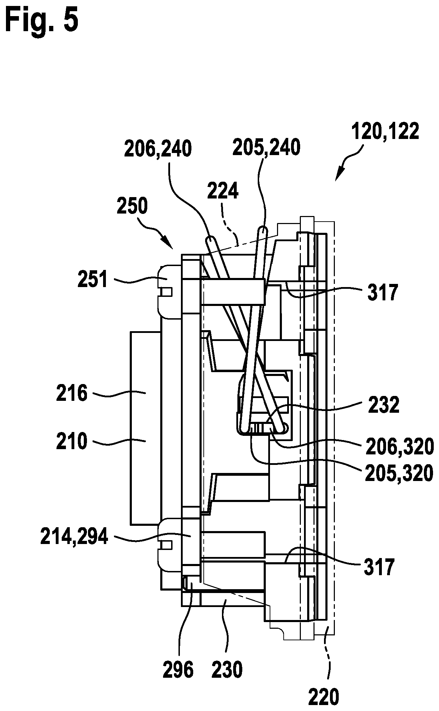

Fig. 5 zeigt das Getriebegehäuse 122 von Fig. 2 bis Fig. 4, wobei analog zu Fig. 2 das Kupplungsgehäuse 220 transparent dargestellt ist. Dabei verdeutlicht Fig. 5 die Anordnung des Schaltelements 240 in der illustrativ rechten Schaltposition 205 und in der illustrativ linken Schaltposition 206. Beispielhaft ist das Schaltelement 240 in der linken Schaltposition 206 dem Getriebedeckel 210 zugewandt angeordnet und in der rechten Schaltposition 205 ist das Schaltelement 240 von dem Getriebedeckel 210 abgewandt in der Ausnehmung 224 angeordnet.

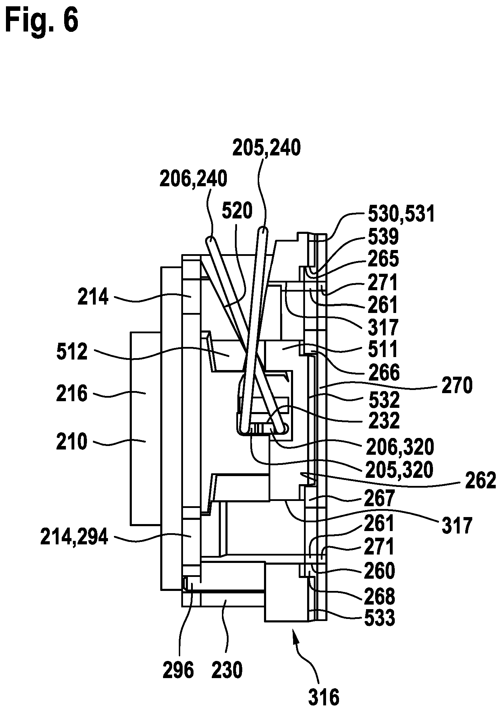

Fig. 6 zeigt das Getriebegehäuse 122 von Fig. 4 ohne das Kupplungsgehäuse 220. Dabei verdeutlicht Fig. 6 die Ausgestaltung des Außenumfangs 316 der Arretierhülse 230. Die Arretierhülse 230 weist vorzugsweise an ihrem Außenumfang 316 diametral gegenüberliegend ausgebildete Umlenkstege 511, 512 zum Umlenken des Schaltelements 240 bei einem Umschalten von der einen in die andere Schaltposition 205, 206 auf. Bevorzugt werden die Umlenkstege 511, 512 durch eine Vertiefung 520 ausgebildet. Vorzugsweise ist das Schaltelement 240 in der Vertiefung 520 angeordnet. Die Umlenkstege 511, 512 bilden vorzugsweise Endanschläge für das Schaltelement 240 in den Schaltpositionen 205, 206 aus.

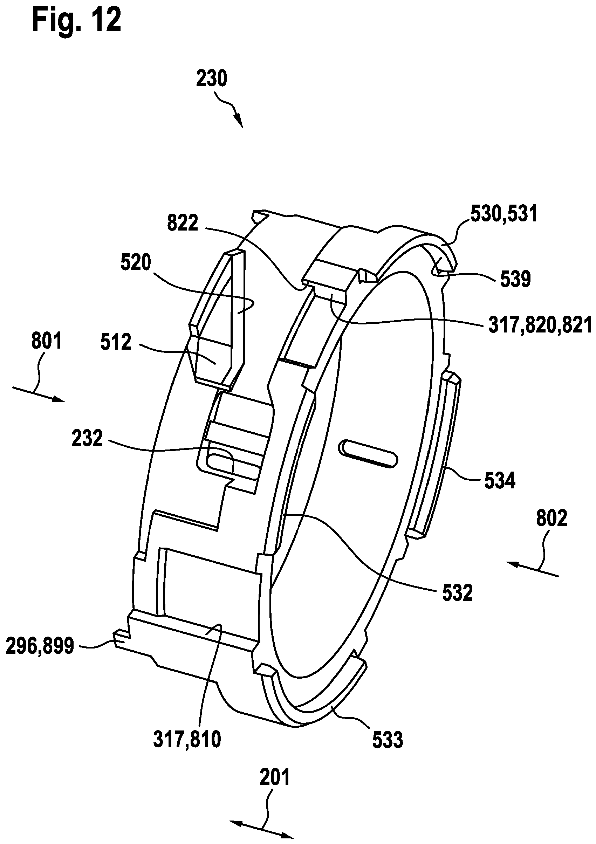

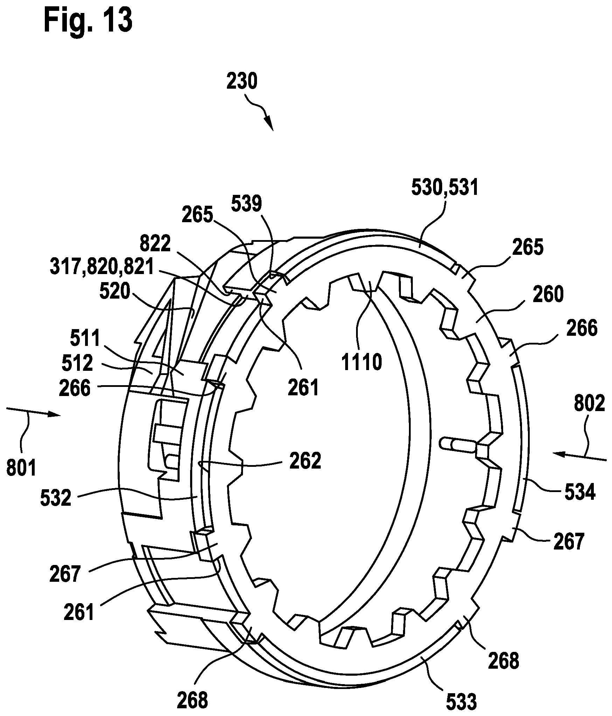

Gemäß einer Ausführungsform weist die Arretierhülse 230 an ihrem der Werkzeugaufnahme 140 zugewandten axialen Ende (802 in Fig. 9) eine Mehrzahl von ringförmigen Erweiterungen 530 auf. Bevorzugt weist die Mehrzahl von ringförmigen Erweiterungen 530 vier ringförmige Erweiterungen 531, 532, 533, (534 in Fig. 12) auf. Darüber hinaus bildet die Arretierhülse 230 am Innenumfang der ringförmigen Erweiterungen 531, 532, 533, (534 in Fig. 12) vorzugsweise eine Aufnahme 539 zur Aufnahme des Fixierrings 260 in radialer Richtung 203 von Fig. 2 auf (vgl. Fig. 13). Hierbei ist der Fixierring 260 bevorzugt derart an der Arretierhülse 230 angeordnet, dass die ringförmigen Erweiterungen 531, 532, 533, (534 in Fig. 12) den Fixierring 260 umfangsseitig aufnehmen.

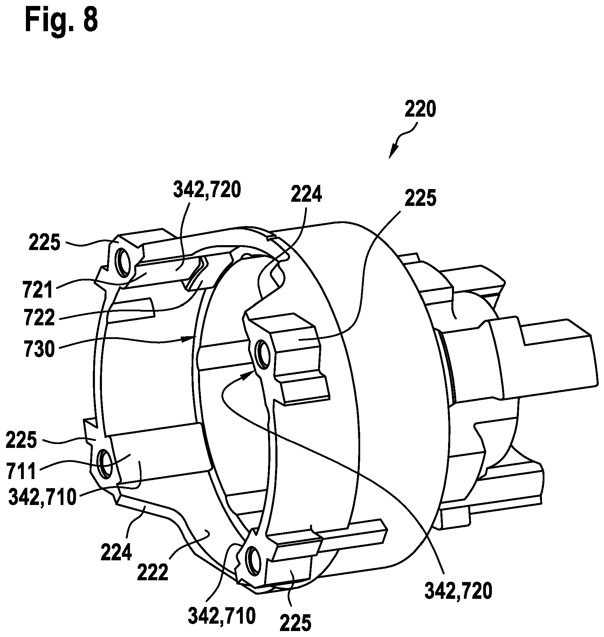

Darüber hinaus weist die Platte 270 vorzugsweise an ihrem Außenumfang Ausnehmungen 271 auf. Des Weiteren weist der Fixierring an seinem Außenumfang bevorzugt Stege 265, 266, 267, 268 auf, wobei zwischen zwei benachbarten Stegen 265, 266, 267, 268 jeweils eine erste oder eine zweite Aufnahme 261, 262 ausgebildet ist. Die erste und zweite Aufnahme 261, 262 sind bevorzugt zur Aufnahme von zugeordneten Vorsprüngen in axialer Richtung 201 in Fig. 2 ausgebildet. Die erste Aufnahme 261 ist vorzugsweise zur Aufnahme von Vorsprüngen (710, 720 in Fig. 8) des Kupplungsgehäuses 220 ausgebildet und die zweite Aufnahme 262 ist zur Aufnahme der ringförmigen Erweiterungen 531, 532, 533, (534 in Fig. 12) der Arretierhülse 230 ausgebildet. Vorzugsweise bilden die erste Aufnahme 261 des Fixierrings 260 und die Ausnehmung 271 der Platte 270 in axialer Richtung 201 von Fig. 2 eine gemeinsame Aufnahme zur Anordnung der Vorsprünge 342 von Fig. 3 des Kupplungsgehäuses 220 aus.

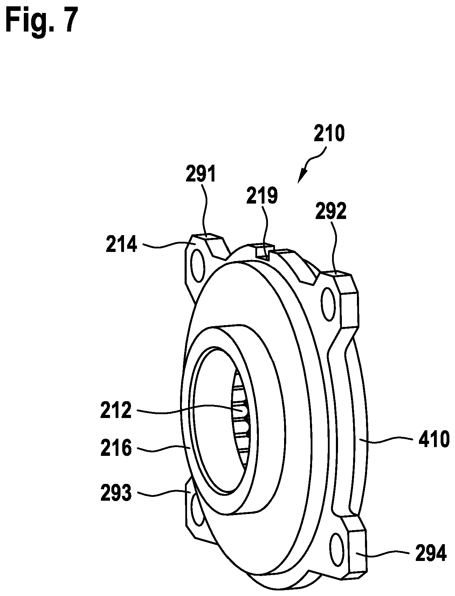

Fig. 7 zeigt den Getriebedeckel 210 des Getriebegehäuses 122 von Fig. 1 bis Fig. 6. Dabei verdeutlicht Fig. 7 den illustrativ scheibenförmigen Grundkörper des Getriebedeckels 210 mit dem zentralen Lagerflansch 216 und den am Außenumfang angeordneten Verbindungsabschnitten 214 mit den Schraubdomen 291 bis 294. Des Weiteren zeigt Fig. 7 das dem Lagerflansch 216 gegenüberliegend am Getriebedeckel 210 ausgebildete Hohlrad 212.

Darüber hinaus verdeutlicht Fig. 7 die Aufnahme 219 zur Aufnahme des zumindest einen axial ausgerichteten Positionierstegs 239 von Fig. 2. Die Aufnahme 219 ist in Fig. 7 illustrativ oben zwischen den Schraubdomen 291 und 292 angeordnet. Es wird darauf hingewiesen, dass die Aufnahme 219 auch an einer beliebig anderen Stelle am Getriebedeckel 210, bzw. zwischen zwei benachbarten Schraubdomen 291 bis 294, angeordnet sein kann. Illustrativ ist die Aufnahme 219 mittig zwischen den zwei Schraubdomen 291 und 292 angeordnet, kann jedoch auch außermittig bzw. versetzt angeordnet sein.

Des Weiteren verdeutlicht Fig. 7 den in der Innenaufnahme 315 von Fig. 3 der Arretierhülse 230 anordenbaren, bevorzugt ringförmigen Zentrierungskragen 410 von Fig. 4. Der Zentrierungskragen 410 weist vorzugsweise einen kleineren Außendurchmesser auf, als das Hohlrad 212. Darüber hinaus ist der Außendurchmesser des Zentrierungskragens 410 vorzugsweise größer als der Durchmesser des zentralen Lagerflanschs 216.

Fig. 8 zeigt das Kupplungsgehäuse 220 des Getriebegehäuses 122 von Fig. 1 bis Fig. 6. Dabei verdeutlicht Fig. 8 die vorzugsweise zwei gegenüberliegenden Ausnehmungen 224. Des Weiteren zeigt Fig. 8 die Verbindungsbereiche 225 zur abschnittsweisen Anordnung des Schraubelements 251 von Fig. 2.

Bevorzugt sind am Innenumfang 222 des Kupplungsgehäuses 220 die einwärts gerichteten Vorsprünge 342 (vgl. auch Fig. 3) ausgebildet. Die Vorsprünge 342 bilden dabei in radialer Richtung 203 von Fig. 2 ausgebildete Erweiterungen aus. Vorzugsweise sind die Vorsprünge 342 zur Verdrehsicherung und/oder Zentrierung der Arretierhülse 230 von Fig. 2 bis Fig. 6 am Kupplungsgehäuse 220 ausgebildet. Gemäß einer Ausführungsform sind die Vorsprünge 342 als einstufige Vorsprünge 710 mit einer einzelnen Stufe 711 und/oder als zweistufige Vorsprünge 720 mit einer ersten Stufe 721 und einer zweiten Stufe 722 ausgebildet. Hierbei weist die zweite Stufe 722 in radialer Richtung 203 eine größere Höhe auf, als die erste Stufe 721. Vorzugsweise sind die Vorsprünge 342 an den Verbindungsbereichen 225 ausgebildet. Illustrativ sind vier Vorsprünge 342 ausgebildet, wobei vorzugsweise die einstufigen Vorsprünge 710 an den illustrativ unteren Verbindungsbereichen 225 ausgebildet sind und die zweistufigen Vorsprünge 720 sind an den illustrativ oberen Verbindungsbereichen 225 ausgebildet.

Vorzugsweise sind im zusammengebauten Zustand des Getriebes 120 die Vorsprünge 710, 720 in den Ausnehmungen 271 der Platte 270 und den ersten Aufnahmen 261 des Fixierrings 260 aufgenommen. Insbesondere sind die Vorsprünge 710, 720 jeweils in den ersten Aufnahmen 261 des Fixierrings 260 aufgenommen.

Des Weiteren weist das Kupplungsgehäuse 220 bevorzugt an seinem Innenumfang zumindest abschnittsweise in Umfangsrichtung eine Anstehkante 730 zur Abstützung der Platte 270 auf. Die Anstehkante 730 bildet vorzugsweise eine nach radial innen gerichtete Erweiterung aus.

Fig. 9 zeigt die Arretierhülse 230 von Fig. 1 bis Fig. 6 mit ihren axialen Enden 801, 802 vom ersten axialen Ende 801 aus betrachtet. Dabei verdeutlicht Fig. 9 den vorzugsweise zylindrischen bzw. ringförmigen Grundkörper der Arretierhülse 230 mit seinen zwei diametral gegenüberliegenden Ausnehmungen 232 zum Durchführen des Schaltelements 240. Darüber hinaus verdeutlicht Fig. 9 die illustrativ V-förmige Vertiefung 520 sowie die gegenüberliegend ausgebildeten Umlenkstege 511, 512 zum Umlenken des Schaltelements 240. Die Umlenkstege 511, 512 weisen dabei vorzugsweise eine zumindest annähernd dreieckige Umlenkkontur auf. Illustrativ weist die Arretierhülse 230 zwei diametral gegenüberliegend ausgebildete Umlenkkonturen mit jeweils einer Vertiefung 520 und zwei Umlenkstegen 511, 512 auf.

Darüber hinaus illustriert Fig. 9 den am dem Getriebedeckel 210 zugewandten axialen Ende 801 angeordneten Positioniersteg 239 sowie die Abstützstege 296 bzw. 898, 899. Die Abstützstege 898, 899 sind vorzugsweise rautenförmig ausgebildet, können jedoch auch eine beliebig andere Form aufweisen, z.B. ein Dreieck. Ebenfalls verdeutlicht Fig. 9 die bevorzugt dreieckige Anordnung des Positionierstegs 239 und der Abstützstege 898, 899. Es wird darauf hingewiesen, dass die Anordnung auch eine beliebig andere Form aufweisen kann, z.B. ein Viereck.

Gemäß einer Ausführungsform weist die Arretierhülse 230 den Vorsprüngen 710, 720 von Fig. 8 zugeordnete Aufnahmen 317 bzw. 810, 820 zur Verdrehsicherung und Zentrierung der Arretierhülse 230 am Kupplungsgehäuse 220 auf. Die Aufnahmen 810, 820 sind bevorzugt in axialer Richtung 201 ausgebildet. Vorzugsweise sind die Aufnahmen 810 illustrativ unten, bzw. im Bereich der Abstützelemente 898, 899, angeordnet und die Aufnahmen 820 sind illustrativ oben, bzw. im Bereich der Umlenkstege 511, 512, angeordnet. Insbesondere ist die Aufnahme 820 oberhalb der Umlenkstege 511, 512 ausgebildet.

Bevorzugt ist zwischen den Aufnahmen 810, 820 eine Ausnehmung 232 angeordnet. Vorzugsweise weist die Aufnahme 820 in axialer Richtung 201 einen ersten und zweiten Abschnitt 821, 822 auf. Dabei ist der erste Abschnitt 821 zur Aufnahme der zweiten Stufe 722 des Kupplungsgehäuses 220 von Fig. 8 ausgebildet und der zweite Abschnitt 822 ist zur Aufnahme der ersten Stufe 721 des Kupplungsgehäuses 220 von Fig. 8 ausgebildet.

Des Weiteren verdeutlicht Fig. 9 die am zweiten axialen Ende 802 ausgebildete Mehrzahl von ringförmigen Erweiterungen 530. Bevorzugt ist zwischen zwei benachbarten ringförmigen Erweiterungen 531, 532, 533, (534 in Fig. 12) jeweils eine Aufnahme 810, 820 ausgebildet.

Fig. 10 zeigt das Schalthohlrad 320 des Getriebes 120 von Fig. 1 bis Fig. 6. Das Schalthohlrad 320 weist illustrativ einen ringförmigen Grundkörper auf, der an seinem Außenumfang 921 eine Aufnahmenut 920 zur abschnittsweisen Aufnahme des Schaltelements 240 von Fig. 2 bis Fig. 6 aufweist.

Darüber hinaus weist das Schalthohlrad 320 an seinem Außenumfang 921 beispielhaft eine weitere Verzahnung 930 auf. Dabei ist die Verzahnung 930 bevorzugt als Verdrehsicherung des Schalthohlrads 320 ausgebildet. Des Weiteren weist das Schalthohlrad 320 an seinem Innenumfang 911 eine Verzahnung 913 auf, entlang der die Planeten 390 des Planetenträgers 392 von Fig. 3 und Fig. 4 abrollen.

Fig. 11 zeigt das Schaltelement 240 des Getriebes 120 von Fig. 1 bis Fig. 6. Das Schaltelement 240 weist illustrativ einen bogenförmigen, bevorzugt zumindest annähernd U-förmigen Grundkörper 1010 auf. Der Grundkörper 1010 weist bevorzugt zwei Enden 1011, 1012 auf, die einwärtsgerichtet sind. Vorzugsweise sind die Enden 1011, 1012 im zusammengebauten Zustand des Getriebes 120 in der Aufnahmenut 920 des Schalthohlrads 320 von Fig. 10 angeordnet.

Fig. 12 zeigt die Arretierhülse 230 von Fig. 9 vom zweiten axialen Ende 802 her betrachtet. Dabei verdeutlicht Fig. 12 die am zweiten axialen Ende 802 angeordnete Mehrzahl von ringförmigen Erweiterungen 530. Illustrativ sind vier ringförmige Erweiterungen 531-534 gezeigt, jedoch können auch mehr oder weniger als vier ringförmige Erweiterungen 531-534 vorhanden sein. Insbesondere sind die ringförmigen Erweiterungen 532, 534 bevorzugt jeweils im Bereich der Ausnehmung 232 angeordnet.

Des Weiteren verdeutlicht Fig. 12 die Aufnahme 539 zur Aufnahme des Fixierrings 260 in radialer Richtung 203 von Fig. 2. Darüber hinaus veranschaulicht Fig. 12 die Aufnahmen 810, 820, insbesondere die Aufnahme 820 mit ihrem ersten und zweiten Abschnitt 821, 822.

Fig. 13 zeigt die Arretierhülse 230 von Fig. 12 mit dem Fixierring 260 von Fig. 2, Fig. 5 und Fig. 6. Der Fixierring 260 weist, wie oben beschrieben, an seinem Außenumfang die Stege 265, 266, 267, 268 auf und an seinem Innenumfang eine Innenverzahnung 1110. Die Außenverzahnung 930 des Schalthohlrads 320 von Fig. 10 bildet bevorzugt mit der Innenverzahnung 1110 des Fixierrings 260 einen Formschluss aus.

Illustrativ ist der Fixierring 260 in der Aufnahme 539 angeordnet. Dabei überragt der Fixierring 260 in axialer Richtung 201 von Fig. 2 die Arretierhülse 230 vorzugsweise nicht. Der Fixierring 260 ist spiegelbildlich aufgebaut und weist auf seiner illustrativ rechten und linken Umfangshälfte jeweils die Stege 265-268 auf. Zwischen den beiden Stegen 265 ist vorzugsweise die ringförmige Erweiterung 531 angeordnet, zwischen den beiden Stegen 268 ist vorzugsweise die ringförmige Erweiterung 533 angeordnet, und zwischen den Stegen 266, 267 ist illustrativ links die ringförmige Erweiterung 532 und illustrativ rechts die ringförmige Erweiterung 534 angeordnet. Die ringförmigen Erweiterungen 531-534 sind bevorzugt jeweils in Aufnahmen 262 des Fixierrings 260 angeordnet. Des Weiteren sind zwischen den Stegen 265, 266 und 267, 268 vorzugsweise jeweils die Aufnahmen 261 zur Anordnung der Vorsprünge 710, 720 des Kupplungsgehäuses 220 von Fig. 8 ausgebildet.

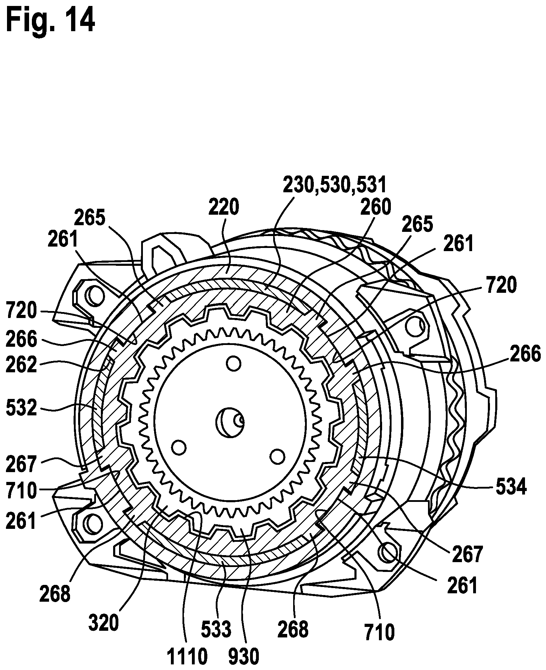

Fig. 14 zeigt die Anordnung des Fixierrings 260 im Getriebe 120 von Fig. 2. Hierbei sind die Vorsprünge 710, 720 des Kupplungsgehäuses 220 in den ersten Aufnahmen 261 des Fixierrings 260 aufgenommen und die ringförmigen Erweiterungen 531-534 des Kupplungsgehäuses 220 sind in den zweiten Aufnahmen 262 des Fixierrings 260 angeordnet. Hierdurch kann eine Verdrehsicherung und/oder Momentenabstützung ermöglicht werden. Des Weiteren verdeutlicht Fig. 14 die Außenverzahnung 930 des Schalthohlrads 320, die mit der Innenverzahnung 1110 des Fixierrings 260 einen Formschluss ausbildet.

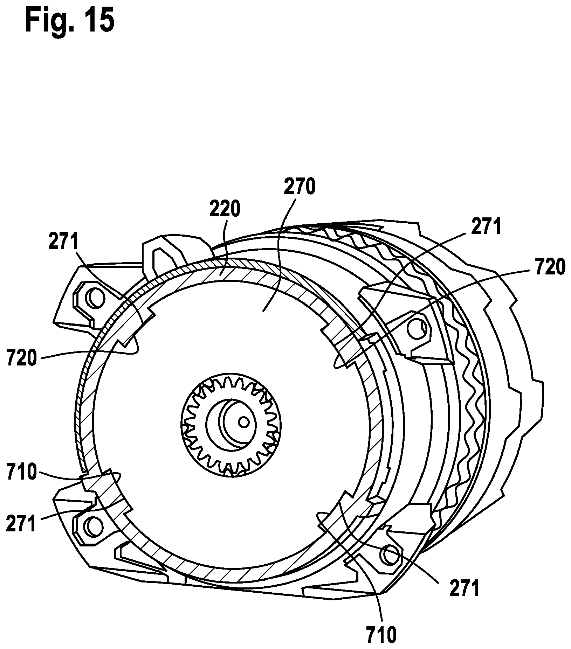

Fig. 15 zeigt die Anordnung der Platte 270 von Fig. 2 im Kupplungsgehäuse 220. Hierbei sind vorzugsweise die Vorsprünge 710, 720 des Kupplungsgehäuses 220 zur Verdrehsicherung in den Ausnehmungen 271 der Platte 270 aufgenommen. Die Platte 270 ist bevorzugt insbesondere dazu ausgebildet, einen Schmiermittelaustritt zwischen den Getriebestufen des Getriebes 120 zu verhindern.

Fig. 16 zeigt das im Getriebegehäuse 122 angeordnete Getriebe 120 von Fig. 2. Dabei verdeutlicht Fig. 16 eine senkrecht zur Drehachse 199 angeordnete Querschnittsebene 1500 zumindest in der ersten, bzw. rechten Schaltposition 205. Illustrativ ist die Querschnittsebene 1500 in axialer Richtung 201 auf Höhe des Hohlrads 212 des Getriebedeckels 210 angeordnet. In der Querschnittsebene 1500 ist vorzugsweise die Arretierhülse 230 zumindest bereichsweise zwischen dem Getriebedeckel 210 und dem Schaltelement 240 angeordnet. Des Weiteren ist in der Querschnittsebene 1500 bevorzugt das Schaltelement 240 zumindest bereichsweise zwischen der Arretierhülse 230 und dem Kupplungsgehäuse 220 angeordnet. Anders ausgedrückt ist zumindest in der Querschnittsebene 1500 ausgehend von der Drehachse 199 nach radial außen zuerst der Getriebedeckel 210, dann die Arretierhülse 230 und anschließend das Kupplungsgehäuse 220 angeordnet, wobei zwischen der Arretierhülse 230 und dem Kupplungsgehäuse 220 bevorzugt das Schaltelement 240 angeordnet ist.

Des Weiteren verdeutlicht Fig. 16 die Zentrierung der Arretierhülse 230 durch den Zentrierungskragen 410 des Getriebedeckels 210. Hierbei ist der Zentrierungskragen 410 in der Innenaufnahme 315 der Arretierhülse 230 angeordnet. Darüber hinaus verdeutlicht Fig. 16 die Anordnung des Fixierrings 260 in der Aufnahme 539 der Arretierhülse 230, wobei der Fixierring 260 derart an der Arretierhülse 230 angeordnet ist, dass die ringförmigen Erweiterungen 531-534 den Fixierring 260 umfangsseitig aufnehmen.

Ebenfalls zeigt Fig. 16 die Anordnung der Platte 270 am Kupplungsgehäuse 220. Hierbei ist die Platte 270 an dem der Werkzeugaufnahme 140 zugewandten, axialen Ende des Fixierrings 260 angeordnet. Insbesondere liegt die Platte 270 an dem der Werkzeugaufnahme 140 zugewandten axialen Ende 802 des Kupplungsgehäuses 220 an. Dabei stützt sich die Platte 270 in Richtung Werkzeugaufnahme 140 an der Anstehkante 730 des Kupplungsgehäuses 220 ab.

Gemäß einer Ausführungsform ist das Getriebe 120 nach Art eines Planetengetriebes ausgebildet und weist mindestens ein Hohlrad 1523, mindestens einen Planetenträger 1521 und zumindest ein Planetenrad 1522 auf. Zwischen dem mindestens einen Planetenträger 1521 und dem zumindest einen Planetenrad 1522 ist illustrativ die Platte 270 angeordnet. Dabei verhindert die Platte 270 in der ersten Schaltposition 205 des Schaltelements 240 eine Bewegung bzw. ein Verschieben des Planetenträgers 1521 in das Hohlrad 1523.

Vorzugsweise sind dem Schaltelement 240 mindestens zwei unterschiedliche Gangstufen 1598, 1599 zugeordnet, wobei das Schaltelement 240 in den den Gangstufen 1598, 1599 zugeordneten, rechten bzw. linken Schaltpositionen 205, 206 von Fig. 2 angeordnet ist. In der rechten Schaltposition 205 des Schaltelements 240 ist das Schalthohlrad 320 in einer illustrativ linken Position bzw. in einer ersten Gangstufe 1598 angeordnet und in der linken Schaltposition 206 des Schaltelements 240 ist das Schalthohlrad 320 in einer illustrativ rechten Position bzw. in einer weiteren Gangstufe 1599 angeordnet.

Darüber hinaus verdeutlicht Fig. 16 die Schutzhülse 196, die der Werkzeugaufnahme 140 zugeordnet ist. Des Weiteren zeigt Fig. 16 einen beispielhaften Aufbau der Drehmomenteinstellvorrichtung mit einer Drehmomenteinstellhülse 197.

## Patentansprüche

1. Handwerkzeugmaschine (100) mit einer Antriebseinheit (125) zum drehenden Antrieb einer Werkzeugaufnahme (140) um eine zugeordnete Drehachse (199), wobei die Antriebseinheit (125) zumindest einen Antriebsmotor (180) sowie ein schaltbares Getriebe (120) aufweist, wobei das schaltbare Getriebe (120) in einem Getriebegehäuse (122) mit einem zumindest abschnittsweise hülsenförmigen Kupplungsgehäuse (220) und einem daran befestigten Getriebedeckel (210) angeordnet ist, wobei ein Schaltelement (240) zum Umschalten des schaltbaren Getriebes (120) zwischen mindestens zwei unterschiedlichen Gangstufen (1598, 1599) vorgesehen ist, und wobei eine Arretierhülse (230) zur Arretierung des Schaltelements (240) in mindestens einer ersten und einer zweiten Schaltposition (205, 206) im Kupplungsgehäuse (220) angeordnet ist, **dadurch gekennzeichnet, dass** das schaltbare Getriebe (120) zumindest in der ersten Schaltposition (205) des Schaltelements (240) senkrecht zur Drehachse (199) eine Querschnittsebene (1500) ausbildet, in der zumindest bereichsweise die Arretierhülse (230) radial zwischen dem Getriebedeckel (210) und dem Schaltelement (240) angeordnet ist und das Schaltelement (240) zumindest bereichsweise zwischen der Arretierhülse (230) und dem Kupplungsgehäuse (220) angeordnet ist.

2. Handwerkzeugmaschine nach Anspruch 1, **dadurch gekennzeichnet, dass** das schaltbare Getriebe (120) ein von dem Schaltelement (240) axial verschiebbares Schalthohlrad (320) aufweist, das in einer von der Arretierhülse (230) ausgebildeten Innenaufnahme (315) angeordnet ist, wobei das Schalthohlrad (320) an seinem Außenumfang (921) eine Aufnahmenut (920) zur zumindest abschnittsweisen Aufnahme des Schaltelements (240) aufweist.

3. Handwerkzeugmaschine nach Anspruch 2, **dadurch gekennzeichnet, dass** der Getriebedeckel (210) einen in der Innenaufnahme (315) der Arretierhülse (230) angeordneten, ringförmigen Zentrierungskragen (410) zur Zentrierung der Arretierhülse (230) in radialer Richtung (203) aufweist.

4. Handwerkzeugmaschine nach einem der vorhergehenden Ansprüche, **dadurch gekennzeichnet, dass** der Getriebedeckel (210) formschlüssig in die Arretierhülse (230) eingreift.

5. Handwerkzeugmaschine nach Anspruch 4, **dadurch gekennzeichnet, dass** die Arretierhülse (230) an ihrem dem Getriebedeckel (210) zugewandten axialen Ende (801) zumindest einen axial ausgerichteten Positioniersteg (239) aufweist, wobei der Getriebedeckel (210) eine Aufnahme (219) zur Aufnahme des zumindest einen axial ausgerichteten Positionierstegs (239) aufweist.

6. Handwerkzeugmaschine nach einem der vorhergehenden Ansprüche, **dadurch gekennzeichnet, dass** die Arretierhülse (230) an ihrem dem Getriebedeckel (210) zugewandten axialen Ende (801) zumindest einen Abstützsteg (898, 899) aufweist, der sich an einem Schraubdom (293, 294) des Getriebedeckels (210) abstützt.

7. Handwerkzeugmaschine nach Anspruch 5 und 6, **dadurch gekennzeichnet, dass** an dem dem Getriebedeckel (210) zugewandten axialen Ende (801) der Arretierhülse (230) mindestens zwei Abstützstege (898, 899) angeordnet sind, wobei der Positioniersteg (239) und die Abstützstege (898, 899) bevorzugt eine dreieckige Anordnung ausbilden.

8. Handwerkzeugmaschine nach einem der vorhergehenden Ansprüche, **dadurch gekennzeichnet, dass** der Getriebedeckel (210) an seiner der Werkzeugaufnahme (140) zugewandten Seite (288) ein Hohlrad (212) des schaltbaren Getriebes (120) ausbildet.

9. Handwerkzeugmaschine nach einem der vorhergehenden Ansprüche, **dadurch gekennzeichnet, dass** das Kupplungsgehäuse (220) an seinem Innenumfang (222) zumindest einen einwärts gerichteten Vorsprung (342) aufweist und die Arretierhülse (230) an ihrem Außenumfang (316) zumindest eine Aufnahme (317) aufweist, wobei der zumindest eine Vorsprung (342) in der zumindest einen Aufnahme (317) angeordnet ist.

10. Handwerkzeugmaschine nach Anspruch 9, **dadurch gekennzeichnet, dass** der zumindest eine Vorsprung (342) parallel zur Drehachse (199) angeordnet ist.

11. Handwerkzeugmaschine nach Anspruch 9 oder 10, **dadurch gekennzeichnet, dass** mehrere Vorsprünge (342) als einstufige Vorsprünge (710) mit einer einzelnen Stufe (711) und/oder als zweistufige Vorsprünge (720) mit einer ersten Stufe (721) und einer zweiten Stufe (722) ausgebildet sind, wobei die zweite Stufe (722) in radialer Richtung (203) eine größere Höhe aufweist als die erste Stufe (721).

12. Handwerkzeugmaschine nach Anspruch 11, **dadurch gekennzeichnet, dass** die Arretierhülse (230) den Vorsprüngen (710, 720) zugeordnete Aufnahmen (810, 820) zur Verdrehsicherung und Zentrierung der Arretierhülse (230) am Kupplungsgehäuse (220) aufweist.

13. Handwerkzeugmaschine nach einem der vorhergehenden Ansprüche, **dadurch gekennzeichnet, dass** ein Fixierring (260) an dem der Werkzeugaufnahme (140) zugewandten axialen Ende (802) der Arretierhülse (230) angeordnet ist, wobei der Fixierring (260) bei einer Anordnung des Schaltelements (240) in der ersten Schaltposition (205) ein Verdrehen des Schalthohlrads (320) verhindert.

14. Handwerkzeugmaschine nach Anspruch 13, **dadurch gekennzeichnet, dass** die Arretierhülse (230) ringförmige Erweiterungen (531, 532, 533, 534) aufweist und der Fixierring (260) derart an der Arretierhülse (230) angeordnet ist, dass die ringförmigen Erweiterungen (531-534) den Fixierring (260) umfangsseitig aufnehmen.

15. Handwerkzeugmaschine nach einem der vorhergehenden Ansprüche, **dadurch gekennzeichnet, dass** das Kupplungsgehäuse (220) eine entlang der Drehachse (199) der Werkzeugaufnahme (140) ausgebildete Ausnehmung (224) aufweist, durch die das Schaltelement (240) mit einem Bedienelement (127) zum Betätigen des Schaltelements (240) verbunden ist.

## Claims

1. Portable power tool (100) having a drive unit (125) for driving a tool receptacle (140) in rotation about an associated axis of rotation (199), wherein the drive unit (125) has at least one drive motor (180) and a shiftable transmission (120), wherein the shiftable transmission (120) is arranged in a transmission housing (122) with an at least partially sleeve-like clutch housing (220) and a transmission cover (210) fastened thereto, wherein a shifting element (240) for shifting the shiftable transmission (120) between at least two different gears (1598, 1599) is provided, and wherein a locking sleeve (230) for locking the shifting element (240) in at least a first and a second shifting position (205, 206) is arranged in the clutch housing (220), **characterized in that** the shiftable transmission (120) forms, at least in the first shifting position (205) of the shifting element (240) perpendicular to the axis of rotation (199), a cross-sectional plane (1500) in which the locking sleeve (230) is arranged at least regionally radially between the transmission cover (210) and the shifting element (240) and the shifting element (240) is arranged at least regionally between the locking sleeve (230) and the clutch housing (220).

2. Portable power tool according to Claim 1, **characterized in that** the shiftable transmission (120) has a shifting ring gear (320) that is displaceable axially by the shifting element (240) and is arranged in an inner receptacle (315) formed by the locking sleeve (230), wherein the shifting ring gear (320) has on its outer circumference (921) a receiving groove (920) for at least partially receiving the shifting element (240).

3. Portable power tool according to Claim 2, **characterized in that** the transmission cover (210) has an annular centring collar (410), arranged in the inner receptacle (315) of the locking sleeve (230), for centring the locking sleeve (230) in a radial direction (203).

4. Portable power tool according to one of the preceding claims, **characterized in that** the transmission cover (210) engages in a form-fitting manner in the locking sleeve (230).

5. Portable power tool according to Claim 4, **characterized in that** the locking sleeve (230) has, at its axial end (801) facing the transmission cover (210), at least one axially oriented positioning tab (239), wherein the transmission cover (210) has a receptacle (219) for receiving the at least one axially oriented positioning tab (239).

6. Portable power tool according to one of the preceding claims, **characterized in that** the locking sleeve (230) has, at its axial end (801) facing the transmission cover (210), at least one supporting peg (898, 899) that is supported on a screw lug (293, 294) of the transmission cover (210).

7. Portable power tool according to Claims 5 and 6, **characterized in that**, at the axial end (801), facing the transmission cover (210), of the locking sleeve (230) at least two supporting pegs (898, 899) are arranged, wherein the positioning tab (239) and the supporting pegs (898, 899) preferably form a triangular arrangement.

8. Portable power tool according to one of the preceding claims, **characterized in that** the transmission cover (210) forms, on its side (288) facing the tool receptacle (140), a ring gear (212) of the shiftable transmission (120).

9. Portable power tool according to one of the preceding claims, **characterized in that** the clutch housing (220) has, on its inner circumference (222), at least one inwardly directed protrusion (342) and the locking sleeve (230) has, on its outer circumference (316), at least one receptacle (317), wherein the at least one protrusion (342) is arranged in the at least one receptacle (317).

10. Portable power tool according to Claim 9, **characterized in that** the at least one protrusion (342) is arranged parallel to the axis of rotation (199).

11. Portable power tool according to Claim 9 or 10, **characterized in that** a plurality of protrusions (342) are configured as one-step protrusions (710) with a single step (711) and/or as two-step protrusions (720) with a first step (721) and a second step (722), wherein the second step (722) has a greater height in the radial direction (203) than the first step (721).

12. Portable power tool according to Claim 11, **characterized in that** the locking sleeve (230) has receptacles (810, 820), assigned to the protrusions (710, 720), for preventing the locking sleeve (230) from rotating and centring it on the clutch housing (220).

13. Portable power tool according to one of the preceding claims, **characterized in that** a fixing ring (260) is arranged at the axial end (802), facing the tool receptacle (140), of the locking sleeve (230), wherein the fixing ring (260) prevents the shifting ring gear (320) from rotating when the shifting element (240) is arranged in the first shifting position (205).

14. Portable power tool according to Claim 13, **characterized in that** the locking sleeve (230) has annular extensions (531, 532, 533, 534) and the fixing ring (260) is arranged on the locking sleeve (230) such that the annular extensions (531-534) receive the fixing ring (260) circumferentially.

15. Portable power tool according to one of the preceding claims, **characterized in that** the clutch housing (220) has a recess (224) which is formed along the axis of rotation (199) of the tool receptacle (140) and via which the shifting element (240) is connected to an operator-control element (127) for actuating the shifting element (240).

## Revendications

1. Machine-outil portative (100) dotée d'une unité d'entraînement (125) servant à l'entraînement en rotation d'un logement d'outil (140) autour d'un axe de rotation (199) associé, l'unité d'entraînement (125) présentant au moins un moteur d'entraînement (180) ainsi qu'une transmission commutable (120), la transmission commutable (120) étant disposée dans un carter de transmission (122) doté d'un carter d'embrayage (220) en forme de douille au moins dans certaines parties et d'un couvercle de transmission (210) fixé à celui-ci, un élément de commutation (240) étant prévu pour la commutation de la transmission commutable (120) entre au moins deux rapports de vitesse (1598, 1599) différents, et une douille de blocage (230) servant au blocage de l'élément de commutation (240) dans au moins une première et une deuxième position de commutation (205, 206) étant disposée dans le carter d'embrayage (220), **caractérisée en ce que** la transmission commutable (120) forme un plan de section transversale (1500) perpendiculairement à l'axe de rotation (199) au moins dans la première position de commutation (205) de l'élément de commutation (240), plan dans lequel la douille de blocage (230) est disposée radialement entre le couvercle de transmission (210) et l'élément de commutation (240) au moins dans certaines régions et l'élément de commutation (240) est disposé entre la douille de blocage (230) et le carter d'embrayage (220) au moins dans certaines régions.

2. Machine-outil portative selon la revendication 1, **caractérisée en ce que** la transmission commutable (120) présente une couronne de commutation (320) qui peut être déplacée axialement par l'élément de commutation (240), laquelle couronne est disposée dans un logement interne (315) formé par la douille de blocage (230), la couronne de commutation (320) présentant sur sa périphérie externe (921) une rainure de logement (920) servant au logement, au moins dans certaines parties, de l'élément de commutation (240).

3. Machine-outil portative selon la revendication 2, **caractérisée en ce que** le couvercle de transmission (210) présente une collerette de centrage (410) annulaire, disposée dans le logement interne (315) de la douille de blocage (230), servant au centrage de la douille de blocage (230) dans la direction radiale (203).

4. Machine-outil portative selon l'une quelconque des revendications précédentes, **caractérisée en ce que** le couvercle de transmission (210) vient en prise avec complémentarité de formes dans la douille de blocage (230).

5. Machine-outil portative selon la revendication 4, **caractérisée en ce que** la douille de blocage (230) présente, à son extrémité axiale (801) tournée vers le couvercle de transmission (210), au moins une nervure de positionnement (239) orientée axialement, le couvercle de transmission (210) présentant un logement (219) servant au logement de l'au moins une nervure de positionnement (239) orientée axialement.

6. Machine-outil portative selon l'une quelconque des revendications précédentes, **caractérisée en ce que** la douille de blocage (230) présente, à son extrémité axiale (801) tournée vers le couvercle de transmission (210), au moins une nervure de support (898, 899) qui est supportée sur un bossage pour vis (293, 294) du couvercle de transmission (210).

7. Machine-outil portative selon les revendications 5 et 6, **caractérisée en ce qu'**au moins deux nervures de support (898, 899) sont disposées à l'extrémité axiale (801), tournée vers le couvercle de transmission (210), de la douille de blocage (230), la nervure de positionnement (239) et les nervures de support (898, 899) formant de préférence un agencement triangulaire.

8. Machine-outil portative selon l'une quelconque des revendications précédentes, **caractérisée en ce que** le couvercle de transmission (210) forme, sur son côté (288) tourné vers le logement d'outil (140), une couronne (212) de la transmission commutable (120).

9. Machine-outil portative selon l'une quelconque des revendications précédentes, **caractérisée en ce que** le carter d'embrayage (220) présente, sur sa périphérie interne (222), au moins une saillie (342) orientée vers l'intérieur et la douille de blocage (230) présente, sur sa périphérie externe (316), au moins un logement (317), l'au moins une saillie (342) étant disposée dans l'au moins un logement (317).

10. Machine-outil portative selon la revendication 9, **caractérisée en ce que** l'au moins une saillie (342) est disposée parallèlement à l'axe de rotation (199).

11. Machine-outil portative selon la revendication 9 ou 10, **caractérisée en ce que** plusieurs saillies (342) sont réalisées sous forme de saillies (710) à un étage comportant des étages (711) individuels et/ou sous forme de saillies (720) à deux étages comportant un premier étage (721) et un deuxième étage (722), le deuxième étage (722) présentant, dans la direction radiale (203), une plus grande hauteur que le premier étage (721).

12. Machine-outil portative selon la revendication 11, **caractérisée en ce que** la douille de blocage (230) présente des logements (810, 820) associés aux saillies (710, 720) pour la fixation antirotation et le centrage de la douille de blocage (230) sur le carter d'embrayage (220).

13. Machine-outil portative selon l'une quelconque des revendications précédentes, **caractérisée en ce qu'**une bague de fixation (260) est disposée à l'extrémité axiale (802), tournée vers le logement d'outil (140), de la douille de blocage (230), la bague de fixation (260) empêchant une rotation de la couronne de commutation (320) lorsque l'élément de commutation (240) est disposé dans la première position de commutation (205).

14. Machine-outil portative selon la revendication 13, **caractérisée en ce que** la douille de blocage (230) présente des prolongements annulaires (531, 532, 533, 534) et la bague de fixation (260) est disposée sur la douille de blocage (230) de telle sorte que les prolongements annulaires (531-534) logent la bague de fixation (260) du côté périphérique.

15. Machine-outil portative selon l'une quelconque des revendications précédentes, **caractérisée en ce que** le carter d'embrayage (220) présente un évidement (224) formé le long de l'axe de rotation (199) du logement d'outil (140), évidement par le biais duquel l'élément de commutation (240) est relié à un élément de commande (127) servant à l'actionnement de l'élément de commutation (240).
